# EUROPEAN PATENT SPECIFICATION

(11) **EP 1 244 328 B1**
(45) Date of publication and mention of the grant of the patent: **04.04.2007**
(21) Application number: 02002895.7
(22) Date of filing: 08.02.2002
(51) Int. Cl.: H04Q 11/00

(54) **Delivering multicast services on a wavelength division multiplexed network**
Lieferung von Mehrfachsenung-Diensten über ein WDM Netzwerk
Délivrance des services de transmission à destinations multiples au-dessus d' un réseau MRL

(30) Priority: 19.03.2001 US 276495 P; 27.12.2001 US 26888
(43) Date of publication of application: 25.09.2002
(73) Proprietor: AT&T Corp., New York, NY 10013-2412 (US)
(72) Inventor: Feuer, Mark D., Colts Neck, NJ 07722 (US); Frigo, Nicholas J., Red Bank, NJ 07701 (US); Lam, Cedric F., Middletown, NJ 07748 (US)
(74) Representative: Kuhnen & Wacker

(56) References cited:
- EP-A- 1 039 670
- US-A- 6 097 533
- WAGNER S S ET AL: "MULTIWAVELENGTH RING NETWORKS FOR SWITCH CONSOLIDATION AND INTERCONNECTION" DISCOVERING A NEW WORLD OF COMMUNICATIONS. CHICAGO, JUNE 14 - 18, 1992. BOUND TOGETHER WITH B0190710, VOL. 4, PROCEEDINGS OF THE INTERNATIONAL CONFERENCE ON COMMUNICATIONS, NEW YORK, IEEE, US, vol. 3, 14 June 1992 (1992-06-14), pages 1173-1179, XP000337910 ISBN: 0-7803-0599-X
- FUJIMOTO N ET AL: "BROADBAND SUBSCRIBER LOOP SYSTEM USING MULTI-GIGABIT INTELLIGENT OPTICAL SHUTTLE NODES" GLOBAL TELECOMMUNICATIONS CONFERENCE. TOKYO, NOV. 15 - 18, 1987, PROCEEDINGS OF THE GLOBAL TELECOMMUNICATIONS CONFERENCE AND EXHIBITION(GLOBECOM), NEW YORK, IEEE, US, vol. 3, 15 November 1987 (1987-11-15), pages 1449-1454, XP000093518
- SALEH A A M ET AL: "ARCHITECTURAL PRINCIPLES OF OPTICAL REGIONAL AND METROPOLITAN ACCESS NETWORKS" JOURNAL OF LIGHTWAVE TECHNOLOGY, IEEE. NEW YORK, US, vol. 17, no. 12, 1 December 1999 (1999-12-01), pages 2431-2448, XP001006866 ISSN: 0733-8724
- TADASU ISHIKAWA ET AL: "LINBO3 OPTICAL WAVEGUIDE MODULATOR FOR BIDIRECTIONAL TRANSMISSION" ELECTRONICS & COMMUNICATIONS IN JAPAN, PART II - ELECTRONICS, SCRIPTA TECHNICA. NEW YORK, US, vol. 77, no. 9, 1 September 1994 (1994-09-01), pages 85-94, XP000499593 ISSN: 8756-663X
- LAM C F ET AL: "Programmable optical multicasting in a regional/metro area network using a wavelength selective optical cross-connect" PROCEEDINGS 27TH EUROPEAN CONFERENCE ON OPTICAL COMMUNICATIONS ECOC'01, vol. 4, 30 September 2001 (2001-09-30), pages 614-615, XP010582707

## Description

### BACKGROUND OF THE INVENTION

The present application claims priority to U.S. Patent US 2002131117, entitled "Delivering Multicast Services On A Wavelength Division Multiplexed Network Using a Configurable Four-Port Wavelength Selective Crossbar Switch," invented by Mark D. Feuer et al., filed March 19, 2001. Additionally, the present application is related to U.S. Patent US 2002131689, entitled "Four-Port Wavelength Selective Crossbar Switches (4WCS) Using Reciprocal WDMS and Optical Circulator Combination," invented by Mark D. Feuer et al., filed March 19, 2001, and to U.S. Patent Application Serial No. (Any Docket 2000-503), entitled "Four-Port Wavelength Selective Crossbar Switches (4WCS) Using Reciprocal WDM MUX-DEIv1UX and Optical Circulator Combination," invented by Mark D. Feuer et al., filed concurrently with the present application.

### Field of the Invention

The present invention relates to a method and a system for multicasting data services on an optical network according to claims 1 and 11. Moreover the present invention relates to a modulator loop for an optical network according to claim 20.

### Description of the Related Art

From EP-A-1 039 670 a wavelength division multiplexed system for optical access rings is known. This known wavelength division multiplexed (WDM) ring architecture includes a central node, which generates a plurality of continuous wave (non-modulated) optical wavelengths which are sent as a WDM signal over an optical facility to a plurality of access nodes of the system. At the access nodes, one or more of these non-modulated optical wavelengths are demultiplexed from the WDM signal received over the optical facility and modulated with the user's or customer's signals and then multiplexed to the WDM signal on the optical facility.

From US-A-6,097,533 a system for amplifying separate optical signals is known traveling in a forward path and a reverse path over an optical communications system used for CATV program distribution. First and second optical circulators, each having a first, second and third port, are connected to respective opposite sides of a bi-directional amplifier. The first port of the first circulator inputs a first optical signal traveling in the forward path. The second port of the first circulator is coupled to an input/output port of the amplifier. The third port of the first circulator outputs an amplified second signal traveling in the reverse path. The second circulator is similarly connected to the side of the amplifier. A first and second signal/signal-WDM coupler, each having a pass port, and add port, and a common port, are coupled to the first and second optical circulators, respectively. The first port of the first optical circulator is connected to the pass port of the first signal/signal-WDM coupler and the third port of the first optical circulator is connected to the add port of the first signal/signal-WDM coupler. The common port of the first signal/signal-WDM coupler outputs an amplified second path signal and inputs a first path signal. The second signal/signal-WDM coupler is similarly connected to the second optical circulator and outputs an amplified first path signal and inputs a second path signal. In this manner, the known system provides bi-directional amplification of signals traveling in opposite paths on a single fiber communications link.

Multicasting is achieved by duplicating multicast packets multiple times for each receiver in a traditional data communication network, but this approach has the disadvantage of creating a bottleneck at the multicast server. There are also proposals for generating a virtual tree network architecture and broadcast data on the virtual tree. Nevertheless, these proposals incur signaling difficulties and Quality of Service issues, such as local bandwidth bottlenecks and latency issues.

Rapid improvements in the cost and performance has made wavelength division multiplexed (WDM) technology an attractive technology for regional and metropolitan area networks. See, for example, A.A.M. Saleh et al., "Architectural Principles of Optical Regional and Metropolitan Access Networks," J. Lightwave Technology, Vol. 17, No. 12, p2431-2448, Dec. 1999.

Accordingly, what is needed is a technique for multicasting in an optical telecommunication network in which the multicast signal is duplicated on multiple wavelengths in a WDM system using a shared common remote modulator. Additionally, what is needed is a technique for changing the multicast group by dynamically configuring the wavelengths reaching the remote modulator using a wavelength selective crossbar switch.

### BRIEF SUMMARY OF THE INVENTION

The present invention provides a technique for selectively and dynamically changing a wavelength configurable crossbar switch for modulating selected wavelengths of a wavelength division multiplexed (WDM) signal with content data. The present invention also provides a technique for providing node-to-node communication on a remotely modulated ring carrier. Additionally, the present invention provides a technique for selectively multicasting on different wavelengths of a WDM signal.

The advantages of the present invention are provided by a method and a system according to claims 1 and 11. resp. for multicasting data services on an optical network. According to the invention, a wavelength division multiplexed (WDM) signal having a plurality of wavelengths is received from a hub node of the optical network, such as a unidirectional ring network or a bi-directional ring network. That is, the WDM signal includes a plurality of wavelengths for multicast data and at least one wavelength for non-multicast data. A four-port wavelength crossbar switch (4WCS) selectably switches each wavelength for multicast data from the optical network to a modulator loop. The modulator loop includes a multicast modulator that modulates the plurality of wavelengths that are for multicast data with the multicast data. Each modulated wavelength is then switched from the modulator loop to the optical network by the 4WCS switch, and sent to a plurality of subscriber nodes of the optical network. According to one aspect of the present invention, wavelengths are selectively separated from the WDM signal for reconfiguring delivery of multicast data by remote control, without manual changes being made to a device selectively separating the wavelengths from the WDM signal.

### BRIEF DESCRIPTION OF THE DRAWINGS

The present invention is illustrated by way of example and not by limitation in the accompanying figures in which like reference numerals indicate similar elements and in which:

Figure 1 shows a functional block diagram of an exemplary unidirectional regional area network providing multicasting of data services on different wavelengths using a configurable four-port wavelength crossbar switch (4WCS) according to a first embodiment of the present invention;

Figure 2 shows a functional block diagram of a bi-directional regional area network providing multicasting of data services on different wavelengths using a configurable four-port wavelength crossbar switch (4WCS) according to a second embodiment of the present invention;

Figure 3 shows a functional block diagram of an experimental WDM ring network that was used for demonstrating the present invention;

Figure 4 is a functional block diagram showing details of hub node as used in the experimental ring network shown in Figure 3;

Figure 5 shows a functional block diagram of a subscriber node that was used in the experimental ring network shown in Figure 3;

Figure 6 shows a spectrum of the wavelengths that were used for the experimental ring network shown in Figure 3;

Figures7A-7B show the received open eye patterns at the subscriber nodes in the experimental ring network shown in Figure 3;

Figure 8 shows the measurement results for two selected subscriber nodes of the experimental ring network shown in Figure 3; and

Figure 9 shows an exemplary configuration of a bi-directional ring network with a protection mechanism according to the present invention.

### DETAILED DESCRIPTION OF THE INVENTION

The present invention relates to a method and an apparatus for multicasting data services on different wavelengths using a configurable four-port wavelength crossbar switch (4WCS). According to the present invention, a wavelength-specific optical carrier can reside on a network provider's location while multicast data modulation resides at a separate content-provider location. By configuring a 4WCS, a service provider can imprint the multicast data onto the selected wavelengths for delivery to users downstream, the provider of the network infrastructure can maintain network integrity, such as, wavelength accuracy, crosstalk power levels, etc.

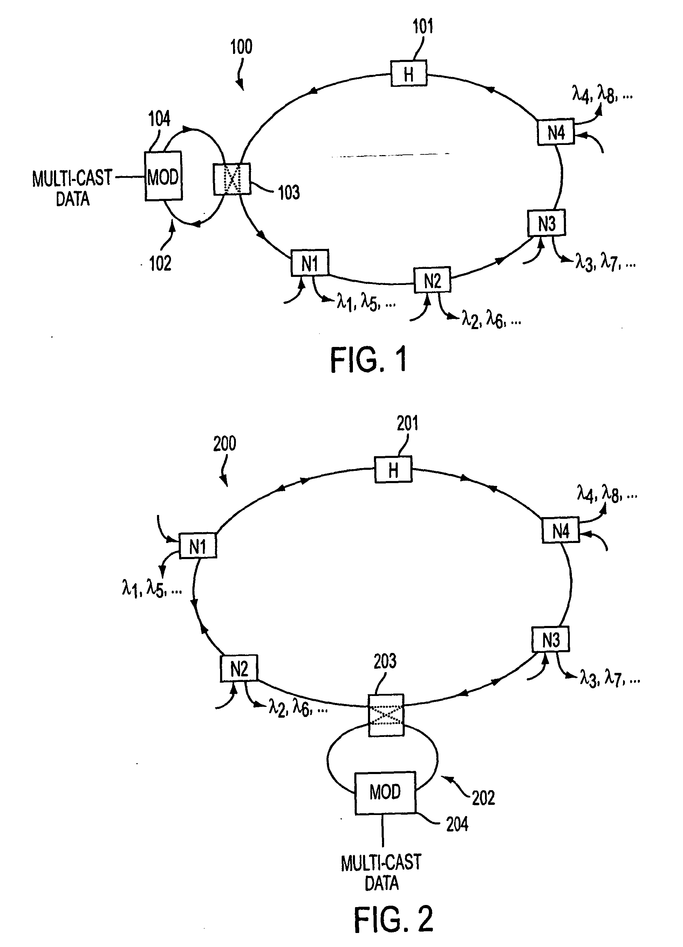

To enable multiple service providers to share the infrastructure cost of a metropolitan area network (MAN), a number of wavelengths can be reserved for multicast services. Figure 1 is a functional block diagram of a unidirectional MAN 100 providing multicasting of data services on different wavelengths using a configurable four-port wavelength crossbar switch (4WCS) according to a first embodiment of the present invention. MAN 100 includes a hub node 101, a modulator loop 102, and a plurality of user nodes N₁-N₄. Hub node 101 sends out signals having standard wavelengths. Modulator loop 102 is connected to MAN 100 by a four-port wavelength selective crossbar switch (4WCS) 103. Four-port crossbar switch 103 can operate based on, for example, diffraction gratings combined with spatial light modulator arrays, tunable fiber gratings with circulators and wavelength slicers, or arrayed waveguide gratings (AWG) combined with optical switches.

Optical sources (not shown) are preferably located at hub node 101, and are under the control of the network provider. A content provider encodes multicast data using an optical modulator MOD 104 that is part of modulator loop 102. While Figure 1 shows hub node 101 and modulator loop 102 as separate nodes, the functions of hub node 101 and modulator loop 102 can alternatively be combined into a single node. Each user node N₁ to N₄ respectively receives a multicast wavelength λ₁ to λ₄, in addition to other assigned wavelengths, in this example, wavelengths λ₅ to λ₈, respectively.

Switch 103 sets all multicast wavelengths used by the multicast data provider at modulator loop 102 to the "cross" state, while all other wavelengths are set to the "bar" state. When a multicast wavelength is set to the cross state in switch 103, the wavelength passes through MOD 104 and receives the multicast data before being routed back onto MAN 100. When a wavelength is set in the bar state, the barred wavelength passes directly through switch 103 without any modulation.

Optical modulator MOD 104, such as an external Mach-Zehnder modulator, simultaneously modulates all multicast wavelengths of the service subscribers in a well-known manner, thereby sharing modulation costs. Moreover, different content provider can share the wavelength-specific optical carriers generated by the hub node, thereby providing a significant cost advantage. Subscribers may be added or removed simply by switching the state of switch 103 in a dynamic manner from a remote location without making manual changes to switch 103. An optical amplifier may be inserted in modulator loop 102 for compensating for insertion losses. Alternatively, a switched semiconductor amplifier may combine both modulation and amplification for the most economical solution.

Increasing the number of wavelengths in the ring and adding routing devices in modulator loop 102 can accommodate diverse service packages from a content provider. Thus, services can be provisioned flexibly, from a single service that spans several wavelengths, to services that are segregated by wavelength, to multiple services broadcast on a single wavelength and shared over several nodes. Additional content providers at other nodes, including content provided from the hub node 101 can be accommodated on wavelengths not routed to the content provider operating modulator loop 102.

In the situation that modulator loop 102 is not on the upstream of all the user nodes (N₁ to N₄ in Fig. 1), a bi-directional ring is required to support users on either side of modulator loop 102. Figure 2 is a functional block diagram of a bi-directional metropolitan area network (MAN) 200 providing multicasting of data services on different wavelengths using a configurable four-port wavelength selective crossbar switch (4WCS) according to a second embodiment of the present invention. In this embodiment, the 4WCS must operate bidirectionally. In Figure 2, a modulator loop 202 that includes a modulator 204 is provided in the "middle" of the MAN 200, that is, modulator loop 202 is physically located in MAN 200 so that at least one subscriber node N is located in either direction around MAN 200. Modulator loop 202 is connected to MAN 200 by a four-port wavelength crossbar switch (4WCS) 203. Accordingly, the clockwise wavelengths that are generated by hub node 201 are modulated by modulator loop 202 and the multicast signal is sent to local nodes (nodes N1 and N2) in the clockwise direction from modulator loop 202. Local nodes (nodes N3 and N4) in the counter-clockwise direction from modulator loop 202 receive the counter-clockwise wavelengths generated by hub node 201 and that have been modulated by modulator loop 202. The clockwise and counter-clockwise traffic may be on two different fibers, or may be on the same fiber, but have different wavelengths. When the counter-clockwise and clockwise wavelengths are all on the same fiber, wavelengths may even share a single modulator for the same multicast signal, provided that the modulator itself can operate bidirectionally.

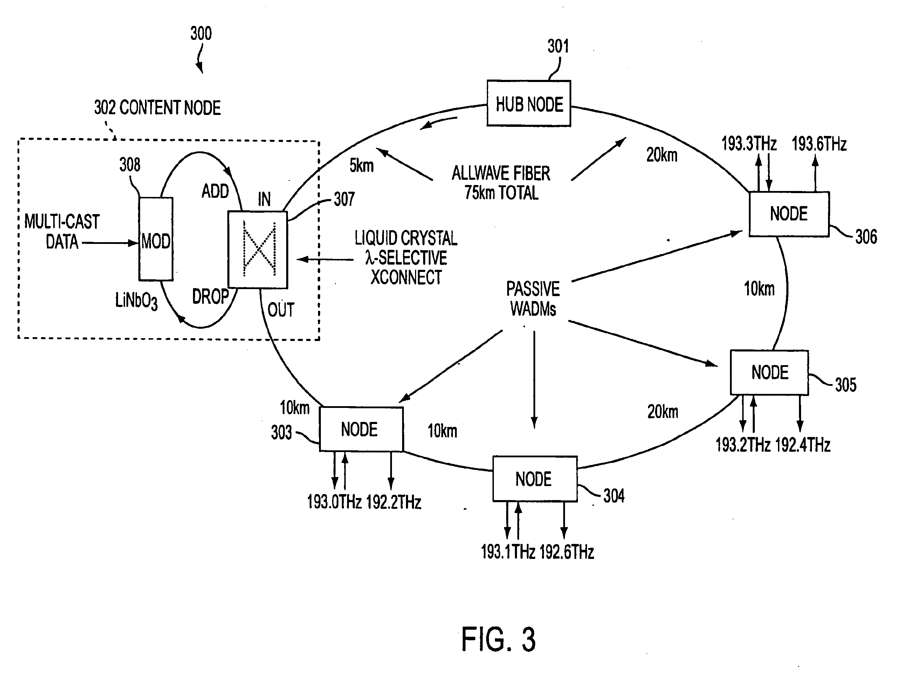

Figure 3 shows a functional block diagram of an experimental WDM ring network 300 that was used for studying the architecture and technology of metropolitan and regional optical access networks, and for demonstrating the present invention. Details regarding experimental WDM ring network 300 are provided in C.F. Lam et al., "Demonstration of programmable optical multicasting in a regional/metro area network", IEEE Photonics Technology Letters, vol. 13, pp. 1236-1238 (2001). WDM ring network 300 included a network operator hub node 301, an independent content node 302 that was remotely located from node 301, and four subscriber nodes 303-306. All of the wavelengths used in network 300 are on the standard 100 GHz ITU grid. Network 300 also had a total circumference of 75 km formed from Allwave^{™} fiber, which is available from Lucent Technologies, Inc. The various nodes forming experimental ring network 300 were physically separated from 5 km to 20 km apart, as indicated in Figure 3. All of the traffic used for the study consisted of a 2³¹-1 pseudo-random bit sequence (PRBS) at 2.488 Gb/s.

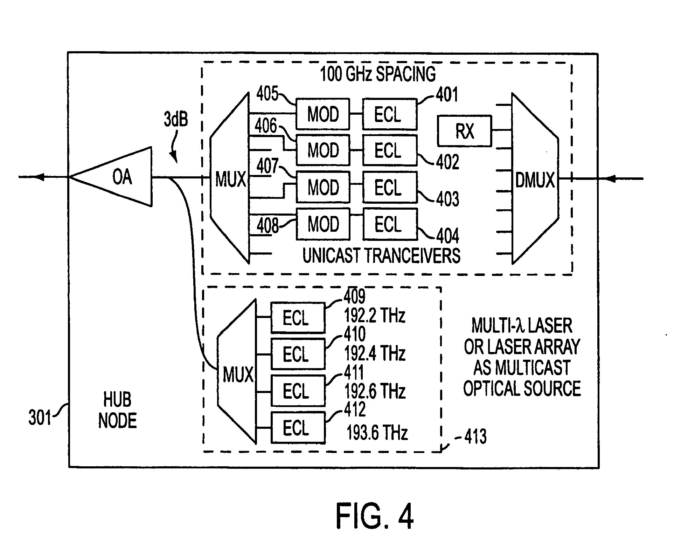

Figure 4 is a functional block diagram showing details of hub node 301 as used in experimental ring network 300. Hub node 301 included four external cavity lasers (ECL) 401-404 having 193.0-193.3 THz frequencies and respectively had external modulation 405-408 for sending unicast (point-to-point) downstream traffic to each individual subscriber node 303-306. At the same time, a multi-wavelength laser, simulated by an array of four ECL lasers 409-412, respectively having frequencies 192.2, 192.4, 192.6 and 193.6 THz, was used as a multicast wavelength source 413 for carrying multicast traffic to individual subscribers.

A remotely-located content node 302 generated the multicast data. Content node 302 was connected to ring network 300 using a Corning Pure Path^{™} wavelength selective cross-connect (WSS) 307. WSS 307 was a liquid crystal based 2x2 four-port device, such as described by A.R. Ranalli et al., "Liquid Crystal-Based Wavelength Selectable Cross-Connect," ECOC 1999, Nice, France. WSS 307 operated on 80 ITU wavelengths having 50 GHz spacing, and had a measured insertion loss of about 4 dB for all the wavelengths in both the bar and cross states. Switch 307 could be selectively set into either a cross state or a bar state for each of the input wavelengths using a digital controller (not shown). The crosstalk between the cross and bar states was less than -40 dB.

WSS 307 at content node 302 was set to the bar state for all the unicast wavelengths so that the unicast signals would bypass (i.e., not be affected by) content node 302. A multicast wavelength could be set into either the bar or cross state at WSS 307. When a multicast wavelength was set into the bar state, the multicast wavelength bypassed content node 302 without being modulated. When, however, a multicast wavelength was set into the cross state, the multicast wavelength would pass through a LiNbO₃ external modulator 308, which modulated the input optical signal using the multicast data. Thus, by controlling the multicast wavelengths in the bar or cross state, a content node can selectively send the same multicast data to any appropriate subscriber node. Modulator 308 was wavelength independent and was shared by all the multicast wavelengths in the cross state. Modulator 308 imposed the multicast data onto all wavelengths passing through modulator 308 from the "drop" port of WSS 307, shown in Figure 3. The multicast wavelengths were inserted back into ring network 300 from the "add" port of WSS 307.

The modulator that was used in content node 302 was polarization dependent. The launch polarizations of the multicast sources were adjusted to match that of the modulator. Alternatively, a polarization independent LiNbO₃ modulator could have been used. In that regard, see T. Ishikawa, "Polarization independent LiNbO₃ waveguide modulator for bidirectional transmission," Electron. Lett., Vol. 28, No. 6, pp. 566-567, 1992. As another alternative, electro-absorptive modulators could be used for multicast content modulation. See, for example, Data Sheets of Electro-Absorption Modulator, Japan Aviation Electronics Industry, Ltd.

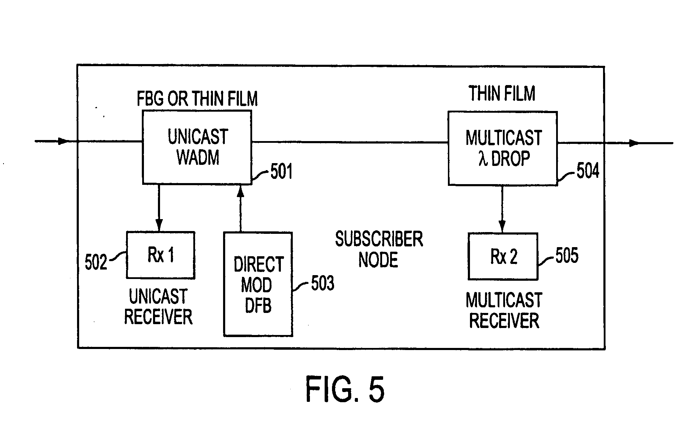

Figure 5 shows a functional block diagram of a subscriber node 303-306 that was used in experimental ring network 300. Each subscriber node 303-306 included two separate passive wavelength add/drops 501 and 502. In this regard, each subscriber node 303-306 dropped a downstream unicast wavelength from hub node 301 and added the same wavelength as upstream traffic to hub node 301 using a passive wavelength add/drop multiplexer (WADM) 501. Both fiber Bragg gratings at subscriber nodes 303 and 304, and thin film filters at subscriber nodes 305 and 306 were used as unicast traffic add/drops. A unicast receiver 502 received the dropped wavelength. The upstream traffic was produced by a directly modulated DFB laser 503 at each individual node. In addition to the unicast wavelength, each subscriber node also dropped an additional multicast wavelength using a thin film add/drop filter 504 that was received by a multicast receiver 505, as shown in Figure 5.

Alternatively, the separate functions provided by add/drops 501 and 502 could be combined by using a wavelength cyclic add/drops, such as disclosed by M.D. Feuer et al., "Upgradeable Metro Networks Using Frequency-Cyclic Optical Add/Drop," Optical Fiber Communication Conference 2001, paper WBB5, March 17-21, Anaheim, CA. Each wavelength cyclic add/drop is capable of adding/dropping combs of periodic wavelength components. Additionally, as accessible wavelengths become more abundant and less expensive than installed fiber, free spectral ranges (FSRs) can be used for different services, i.e., one FSR for point-to-point unicast service and another FSR for point-to-multi-point multicast services. Accordingly, different FSRs would be separated at the subscriber nodes using intermediate WDMs.

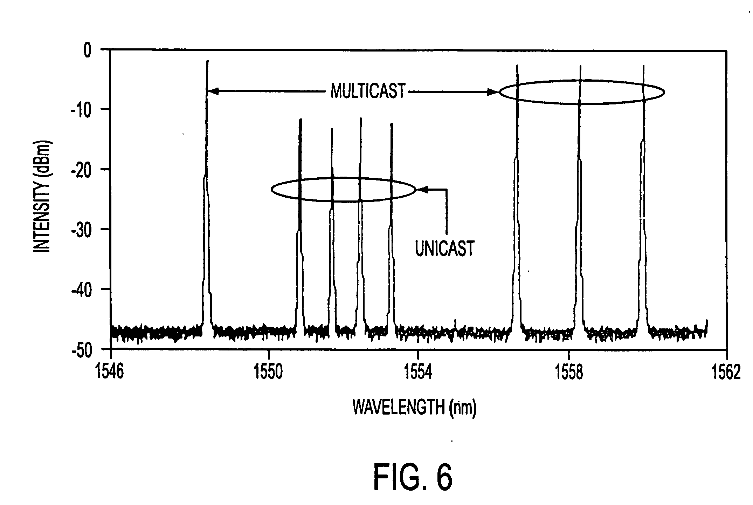

Figure 6 shows a spectrum of the wavelengths that were used for experimental ring network 300. The multicast wavelengths were selected according to the particular wavelength add/drop multiplexers (WADMs) that were available at the time. Alternatively, multi-wavelength lasers, such as a DFB or a DBR array as disclosed by, for example, M.G. Young et al., "A 16x1 wavelength division mulitplexer with integrated distributed Bragg reflector lasers and absorption modulators," IEEE Phot. Tech. Lett., 5(8): 908-910 (1993)), or a multi-frequency laser as disclosed by, for example, M. Zirngibl, et al., "Characterization of a multiwavelength waveguide grating router laser," IEEE Phot. Tech. Lett., 6:1082-1084 (1994)), having a comb of output frequencies could have been used as sources.

The unicast traffic and the multi-wavelength source outputs were multiplexed using a 3 dB coupler (in principle, a wavelength division multiplexer) and amplified by a post amplifier. The rest of experimental ring network 300 had no optical amplifiers. At the hub output, each unicast wavelength has an output power of - 1dBm, while each multicast wavelength has an output power of 9 dBm because the multicast wavelengths suffered more loss at the content node, as shown in Figure 6. For larger scale networks having longer distances between nodes, more nodes or higher bit rates, optical line amplifiers could be used for enhancing the power budget. Conventional Erbium-doped fiber amplifiers (EDFAs), Erbium-doped waveguide amplifiers (EDWAs) and solid state optical amplifiers (SOAs) are lower cost candidates for metro-optical networks that can be integrated with WADMs for improving the network scalability. In this regard, see, for example, P. Iannone et al., "A 160-km Transparent Metro WDM Ring Network Featuring Cascaded Erbium-Doped Waveguide Amplifiers," paper WBB3, OFC Technical Digest 2000.

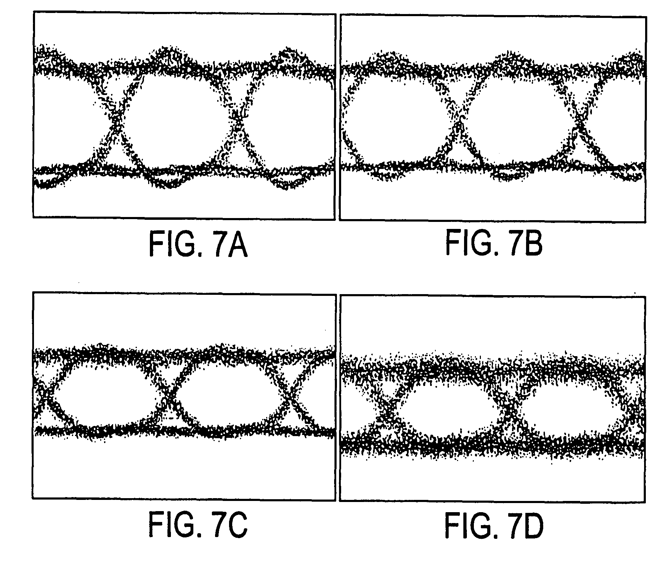

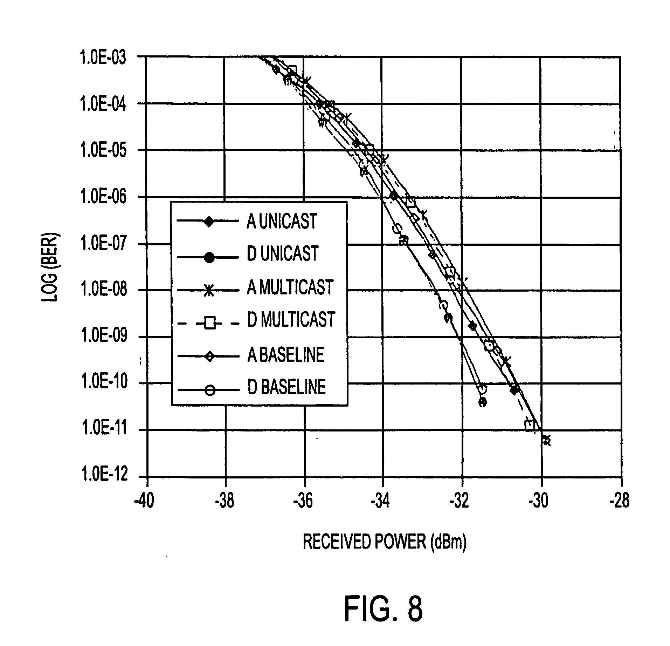

All the multicast wavelengths were individually set to the bar and cross states. A bit error rate (BER) and an eye diagram measurement were performed on each of the multicast and downstream unicast channels. The same PRBS sequence with different electrically delayed phases was applied to different modulators in the system. When a multicast wavelength was set to the cross state, the multicast receiver at a corresponding subscriber node 303-306 showed a clear open eye with error free reception, as shown in Figures7A-7B, which respectively show the received open eye pattern at subscriber nodes 303-306. To verify the overall system performance, all of the data channels were turned on and a worst-case bit-error rate measurement was performed for each individual channel. The measurement results at nodes 303 and 306 are plotted in Figure 8. For clarity, similar results that were obtained for nodes 304 and 305 are omitted from Figure 8. The sensitivity for all the channels at 10⁻⁹ BER was between -30 dBm and -32 dBm. There was no error floor measured in the experiment. Figure 8 also includes the base line back-to-back BER between the receiver and the transmitter for unicast traffic. Essentially, no penalty due to the WSS and multicast channels was detected. The upstream channel performance has been studied and reported in M.D. Feuer et al., "Crosstalk in a Metro-Scale Ring with Passive Optical Add/Drop," paper ThB4, Proceedings of IEEE LEOS 2000, pp. 694-695, Nov. 13-16, 2000, Rio Grande, Puerto Rico. The addition of the multicast signals produced no further degradation to the upstream signals.

Although a laser diode array was used in the experimental ring network, a multi-wavelength output source and WSS could have been used for this type of application. Furthermore, the multi-wavelength source, the modulator and drive electronics could all be shared among subscribers. For example, the content provider could be a CATV primary headend and the subscribers could be secondary headends, such as disclosed by Oleh Sniezko et al., "HFC Architecture in the Making," CED, vol.25, no.7, July 1999. In such a case, the content could be digital TV signals using QAM modulation schemes. For example, DirectTV^{™} employs QPSK modulation and strong forward error correction (FEC). Such signal requires only a 6 dB signal-to-noise ratio (SNR) and is sufficiently robust to be distributed on a digital optical link. To achieve a 10⁻⁹ BER without FEC, the required SNR for QPSK and 16-QAM modulation is 16 dB and 24 dB respectively. These values are close to the requirements for on-off keyed digital signals (15 dB), and can be easily achieved in a metro-scale WDM network. Distribution of broadcast digital TV signals on passive WDM optical networks has been demonstrated before, such as disclosed by K.C. Reichmann et al., "Simultaneous Delivery of 1280 Video Channels over a WDM Passive Optical Network," Proceedings of 26th European Conference on Optical Communication, Vol. 3, pp. 79-80, Sept. 3-7, 2000, Munich, Germany.

In experimental ring network 300, the unicast lasers were conveniently separated from the multicast laser. In reality, the output of the unicast lasers could also be used by content node 302 by simply turning off the unicast modulators at hub node 301. Thus, the laser sources can be shared between hub node 301 and content node 302. By consolidating all laser sources at a service provider hub node, the content node would be freed from ensuring the correct output wavelengths and the optical source integrity. Consequently, the service provider would provide and monitor all wavelength sources from a central location. Further, the multi-wavelength sources could be shared among several service providers.

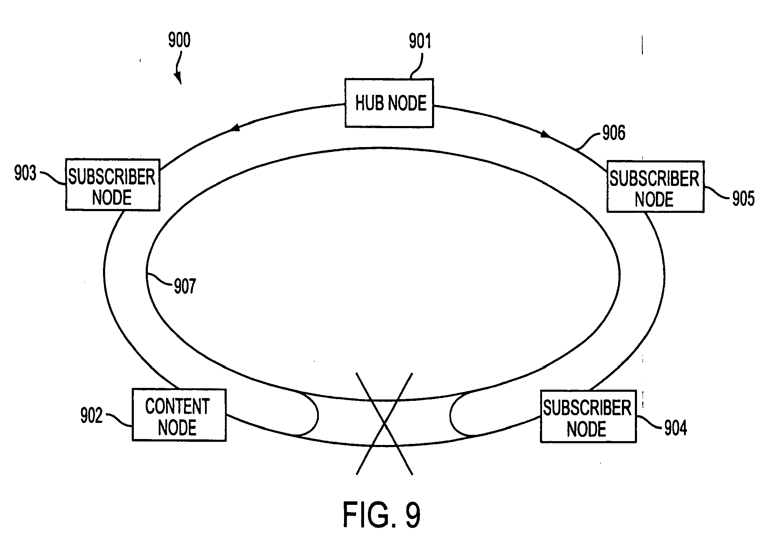

Figure 9 shows an exemplary configuration of a bi-directional ring network 900 according to the present invention. The clockwise traffic uses different wavelengths than the counter-clockwise traffic. In bi-directional ring network 900, a content node 902 can be located anywhere in the ring. Multicast wavelengths are transmitted in both directions from a hub node 901, passing through content node 902 and reaching all of the subscriber nodes 903-905. For bi-directional network 900, the WADMs on ring fiber 906 would be bi-directional add/drops, such as thin film filters. The remote modulator and the 2×2 WSS (both not shown) are both bi-directional and reversible. A protection fiber 907 is also shown. In the case of a cut fiber, a loop back mechanism, as shown in Figure 9, restores the traffic in ring fiber 906. This restoration scheme works because of the optical transparency and bi-directionality of the node add/drop devices.

Another alternative configuration for a ring network according to the present invention would be to cascade more than one content node. In this alternative configuration, wavelengths could be shared back and forth between the content nodes.

While the invention has been described with respect to specific examples including presently preferred modes of carrying out the invention, those skilled in the art will appreciate that there are numerous variations and permutations of the above described systems and techniques that fall within the scope of the invention as set forth in the appended claims.

## Claims

1. A method for multicasting data services on an optical network, the optical network comprising:
a hub node (301),
a data service content node (302), and
a plurality of data service user nodes (303, 304, 305, 306),
the method comprising steps of:
receiving at the data service content node (302) a wavelength division multiplexed signal from the hub node (301) of the optical network, the wavelength division multiplexed signal including a plurality of wavelengths;
separating at least one wavelength from the plurality of wavelengths of the wavelength division multiplexed signal;
modulating the at least one wavelength separated wavelength with multicast data to produce a multicast data service wavelength:
recombining the multicast data service wavelength with each wavelength of the wavelength division multiplexed signal that was not separated from the wavelength division multiplexed signal to produce a combined wavelength division multiplexed signal;
sending the combined wavelength division multiplexed signal to a plurality of data service user nodes of the optical network for delivering the multicast data,
receiving at the plurality of data service user nodes the combined wavelength division multiplexed signal, and
separating at each of the plurality of user nodes the multicast data service wavelength from the combined wavelength division multiplexed signal.

2. The method according to claim 1, wherein the hub node (301) and the content node (302) are co-located.

3. The method according to claim 1, wherein the step of separating at least one wavelength includes a step of selectively separating at least one wavelength for reconfiguring delivery of multicast data.

4. The method according to claim 3, wherein the step of selectively separating at least one wavelength is controlled remotely, without manual changes being made to a device selectively separating the at least one wavelength.

5. The method according to claim 1, wherein the wavelength division multiplexed signal includes a plurality of wavelengths for multicast data and at least one wavelength for non-multicast data.

6. The method according to claim 1, wherein the step of separating at least one wavelength includes a step of switching each separated wavelength for multicast data from the optical network to a modulator loop, and
wherein the step of recombining each separated wavelength includes a step of switching each modulated wavelength from the modulator loop to the optical network.

7. The method according to claim 6, wherein the steps of switching are performed by a four-port wavelength crossbar switch (307).

8. The method according to claim 7, wherein each step of switching selectably switches at least one selected wavelength.

9. The method according to claim 1, wherein the optical network is a unidirectional ring network.

10. The method according to claim 1, wherein the optical network is a bi-directional ring network.

11. A system for multicasting data services on an optical network, the system comprising:
a plurality of data service user nodes (303, 304, 305, 306) coupled to the optical network;
a hub node (301) coupled to the optical network for generating a wavelength
division multiplexed WDM signal, the WDM signal including a plurality of signal wavelengths;
a wavelength selective cross connect switch (307) coupled to the optical network adapted to separate at least one selected data service wavelength from the WDM signal; and
a modulator loop coupled to the wavelength selective cross connect switch for receiving each separated data service wavelength, the modulator loop comprising an optical modulator (308) coupled to a multicast data service source for modulating each separated data service wavelength with multicast data service data to produce a multicast data service wavelength,
the wavelength selective cross connect switch adapted to recombine each multicast data service wavelength with each wavelength of the WDM signal that was not separated from the WDM signal to produce a modulated wavelength division multiplexed signal, and adapted to
transmit the modulated WDM signal to the plurality of subscriber nodes of the optical network for delivering the multicast data service data.

12. The system according to claim 11, wherein the selection device (307) selectively separates at least one wavelength reconfiguring delivery of multicast data.

13. The system according to claim 12, wherein the selection device (307) is controlled remotely, without manual changes being made to the device for selectively separating the at least one wavelength.

14. The system according to claim 11, wherein the wavelength division multiplexed signal includes a plurality of wavelengths for multicast data and at least one wavelength for non-multicast data.

15. The system according to claim 11, wherein the wavelength division multiplexed signal includes a plurality of wavelengths for multicast data and at least one wavelength for non-multicast data, and
wherein the modulator node (308) includes a multicast modulator modulating each wavelength for multicast data with the multicast data in the modulator node (308).

16. The system according to claim 11, wherein the selection device is a four-port wavelength crossbar switch (103; 203).

17. The system according to claim 16, wherein the switch selectably switches at least one selected wavelength.

18. The system according to claim 11, wherein the optical network is a unidirectional ring network.

19. The system according to claim 11, wherein the optical network is a bi-directional ring network.

20. An apparatus (102) for an optical network, the apparatus (102) comprising:
- a multicast data source adapted to provide multicast data service data
- an optical modulator (308) coupled to the multicast data source, the modulator adapted to modulate a plurality of multicast data service wavelengths with said multicast data service data, and
- a wavelength selective cross-connect switch (103)
coupled to said optical modulator and
adapted to be coupled to the optical network and
adapted to receive a WDM signal having a plurality of multicast data service wavelengths; and
adapted to select and switch said multicast data service wavelengths to said optical modulator; and
adapted to switch said modulated plurality of multicast data service wavelengths to said optical network;

21. The apparatus according to claim 20, wherein the switch (103) is a four-port wavelength crossbar switch.

22. The apparatus according to claim 21, wherein the switch (103) selectably switches at least one selected wavelength.

23. The apparatus according to claim 20, wherein the optical network is a unidirectional ring network.

24. The apparatus according to claim 20, wherein the optical network is a bi-directional ring network.

## Patentansprüche

1. Verfahren zum Sammelsenden von Daten-Services an ein optisches Netzwerk, wobei das optische Netzwerk folgendes aufweist:
einen Hub-Knoten (301),
einen Datenservice-Inhalt-Knoten (302), und
eine Vielzahl an Datenservice-Anwender-Knoten (303, 304, 305, 306),
mit den folgenden Schritten:
Empfangen an dem Datenservice-Inhalt-Knoten (302) eines Wellenlängen-Multiplexsignals von dem Hub-Knoten (301) des optischen Netzwerks, wobei das Wellenlängen-Multiplexsignal eine Vielzahl an Wellenlängen enthält;
Trennen von wenigstens einer Wellenlänge von der Vielzahl der Wellenlängen des Wellenlängen-Multiplexsignals;
Modulieren der wenigstens einen abgetrennten Wellenlänge mit den Sammelsende-Daten, um eine Sammelsende-Datenservice-Wellenlänge zu erzeugen;
Neuverbinden der Sammelsende-Datenservice-Wellenlänge mit jeder Wellenlänge des Wellenlängen-Multiplexsignals, welche nicht von dem Wellenlängen-Multiplexsignal abgetrennt worden ist, um ein kombiniertes Wellenlängen-Multiplexsignal zu erzeugen;
Senden des kombinierten Wellenlängen-Multiplexsignals mit einer Vielzahl von Datenservice-Anwender-Knoten des optischen Netzwerks zur Übermittlung von Sammeisende-Daten,
Empfangen an der Vielzahl der Datenservice-Anwender-Knoten des kombinierten Wellenlängen-Multiplexsignals, und
Abtrennen an jedem der Vielzahl der Anwender-Knoten der Sammelsende-Datensservice-Wellenlänge von dem kombinierten Wellenlängen-Multiplexsignal.

2. Verfahren nach Anspruch 1, bei dem der Hub-Knoten (301) und der Inhalt-Knoten (302) zusammen an einem Ort gelegen sind.

3. Verfahren nach Anspruch 1, bei dem der Schritt gemäß der Abtrennung von wenigstens einer Wellenlänge einen Schritt umfasst entsprechend einem selektiven Abtrennen von wenigstens einer Wellenlänge, um die Übermittlung der Sammelsende-Daten erneut zu konfigurieren.

4. Verfahren nach Anspruch 3, bei dem der Schritt gemäß einem selektiven Abtrennen von wenigstens einer Wellenlänge ferngesteuert wird und zwar ohne eine von Handänderung an einer Vorrichtung, die selektiv die wenigstens eine Wellenlänge abtrennt.

5. Verfahren nach Anspruch 1, bei dem das Wellenlängen-Multiplexsignal eine Vielzahl an Wellenlängen für ein Sammelsenden von Daten und wenigstens eine Wellenlänge für kein Sammelsenden von Daten enthält.

6. Verfahren nach Anspruch 1, bei dem der Schritt gemäß dem Abtrennen von wenigstens einer Wellenlänge einen Schritt umfasst, bei dem jede abgetrennte Wellenlänge für das Sammelsenden von Daten von dem optischen Netzwerk zu einer Modulatorschleife geschaltet wird, und bei dem der Schritt der Rekombination von jeder abgetrennten Wellenlänge einen Schritt gemäß einem Umschalten von jeder modulierten Wellenlänge aus der Modulatorschleife zu dem optischen Netzwerk hin enthält.

7. Verfahren nach Anspruch 6, bei dem die Schritte gemäß dem Umschalten durch einen Vier-Port-Wellenlängen-Crossbar-Schalter (307) durchgeführt werden.

8. Verfahren nach Anspruch 7, bei dem jeder Schritt des Schaltvorganges selektiv wenigstens eine ausgewählte Wellenlänge umschaltet.

9. Verfahren nach Anspruch 1, bei dem das optische Netzwerk aus einem Einrichtungs-Ringnetzwerk besteht.

10. Verfahren nach Anspruch 1, bei dem das optische Netzwerk aus einem Zweirichtungs-Ringnetzwerk besteht.

11. System zum Sammelsenden von Daten-Services auf einem optischen Netzwerk, welches System folgendes aufweist:
eine Vielzahl an Datenservice-Anwender-Knoten (303, 304, 305, 306), die an das optische Netzwerk gekoppelt sind;
einen Hub-Knoten (301), der an das optische Netzwerk gekoppelt ist, um ein Wellenlängen-Multiplexsignal zu generieren, wobei das WDM-Signal eine Vielzahl von Signalwellenlängen enthält;
einen Wellenlängen-Selektiv-Querverbindungsschalter (307), der an das optische Netzwerk gekoppelt ist und dafür ausgebildet ist, um wenigstens eine ausgewählte Datenservice-Wellenlänge aus dem WDM-Signal abzutrennen; und
eine Modulatorschleife, die an den Wellenlängen-Selektiv-Querverbindungsschalter gekoppelt ist, um jede abgetrennte Datenservice-Wellenlänge zu empfangen, wobei die Modulatorschleife einen optischen Modulator (308) enthält, der an einer Sammelsende-Datenservice-Quelle gekoppelt ist, um jede abgetrennte Datenservice-Wellenlänge mit den Sammelsendedaten-Servicedaten zu modulieren, um eine Sammelsende-Datenservice-Wellenlänge zu generieren,
wobei der Wellenlängen-Selektiv-Querverbindungsschalter dafür ausgebildet ist, um jede Sammelsende-Datenservice-Wellenlänge mit jeder Wellenlänge des WDM-Signals wieder zu verbinden oder zu kombinieren, die nicht von dem WDM-Signal abgetrennt worden ist, um ein moduliertes Wellenlängen-Multiplexsignal zu erzeugen, und dafür ausgebildet ist, um das modulierte WDM-Signal zu der Vielzahl an Teilnehmer-Knoten des optischen Netzwerks zu senden, um die Sammelsende-Datenservice-Daten zu übermitteln.

12. System nach Anspruch 11, bei dem die Wählvorrichtung (307) selektiv wenigstens eine Wellenlänge für eine wiederkonfigurierbare Übergabe der Sammelsende-Daten abtrennt.

13. System nach Anspruch 12, bei dem die Wählvorrichtung (307) ferngesteuert ist und zwar ohne Änderungen von Hand an einer Vorrichtung zum selektiven Abtrennen von der wenigstens einen Wellenlänge.

14. System nach Anspruch 11, bei dem das Wellenlängen-Multiplexsignal eine Vielzahl am Wellenlängen enthält, um eine Sammelsendung von Daten durchzuführen und wenigstens eine Wellenlänge enthält, um keine Sammelsendung von Daten durchzuführen.

15. System nach Anspruch 11, bei dem das Wellenlängen-Multiplexsignal eine Vielzahl an Wellenlängen enthält, um eine Sammelsendung von Daten durchzuführen, und wenigstens eine Wellenlänge enthält, um keine Sammelsendung von Daten durchzuführen, und bei dem der Modulator-Knoten (308) einen Sammelsende-Modulator enthält, der jede Wellenlänge für ein Sammelsenden von Daten moduliert und zwar mit den Sammelsende-Daten in dem Modulator-Knoten (308).

16. System nach Anspruch 11, bei dem die Wählvorrichtung aus einem Vier-Port-Wellenlängen-Crossbar-Schalter (103; 203) besteht.

17. System nach Anspruch 16, bei dem der Schalter selektiv wenigstens eine ausgewählte Wellenlänge schaltet.

18. System nach Anspruch 11, bei dem das optische Netzwerk aus einem Einrichtungs-Ringnetzwerk besteht.

19. System nach Anspruch 11, bei dem das optische Netzwerk aus einem Zweirichtungs-Ringnetzwerk besteht.

20. Gerät (102) für ein optisches Netzwerk, welches Gerät (102) folgendes aufweist:
eine Sammelsende-Datenquelle, die dafür ausgelegt ist, um ein Sammelsenden von Daten-Servicedaten durchzuführen;
einen optischen Modulator (308), der an die Sammelsende-Datenquelle gekoppelt ist, wobei der Modulator dafür ausgelegt ist, um eine Vielzahl von Sammelsende-Datenservice-Wellenlängen mit den Sammelsende-Daten-Servicedaten zu modulieren und
einen Wellenlängen-Selektiv-Querverbindungsschalter (103), der an den optischen Modulator gekoppelt ist und der dafür ausgebildet ist, um an das optische Netzwerk gekoppelt zu werden, und dafür ausgelegt ist, um ein WDM-Signal zu empfangen, welches eine Vielzahl an Sammelsende-Datenservice-Wellenlängen enthält; und
dafür ausgelegt ist, die Sammelsende-Datenservice-Wellenlängen auszuwählen und zu dem optischen Modulator hin zu schalten; und
dafür ausgebildet ist, um die modulierte Vielzahl der Sammelsende-Datenservice-Wellenlängen zu dem optischen Netzwerk hin umzuschalten.

21. Gerät nach Anspruch 20, bei dem der Schalter (103) aus einen Vier-Port-Wellenlängen-Crossbar-Schalter besteht.

22. Gerät nach Anspruch 21, bei dem der Schalter (103) selektiv wenigstens eine ausgewählte Wellenlänge umschaltet.

23. Gerät nach Anspruch 20, bei dem das optische Netzwerk aus einem Einrichtungs-Ringnetzwerk besteht.

24. Gerät nach Anspruch 20, bei dem das optische Netzwerk aus einem Zweirichtungs-Ringnetzwerk besteht.

## Revendications

1. Procédé destiné à une multidiffusion de services de données sur un réseau optique, le réseau comprenant :
un noeud de concentrateur (301),
un noeud de contenu de services de données (302), et
une pluralité de noeuds d'utilisateurs de services de données (303, 304, 305, 306),
le procédé comprenant les étapes suivantes :
recevoir au niveau du noeud de contenu de services de données (302) un signal multiplexé par répartition en longueur d'onde à partir du noeud de concentrateur (301) du réseau optique, le signal multiplexé par répartition en longueur d'onde comportant une pluralité de longueurs d'onde ;
séparer au moins une longueur d'onde de la pluralité de longueurs d'onde du signal multiplexé par répartition en longueur d'onde ;
moduler la au moins une longueur d'onde séparée des longueurs d'onde avec des données multidiffusées afin de produire une longueur d'onde de services de données multidiffusées:
recombiner la longueur d'onde de services de données multidiffusées avec chaque longueur d'onde du signal multiplexé par répartition en longueur d'onde qui n'a pas été séparée du signal multiplexé par répartition en longueur d'onde afin de produire un signal multiplexé par répartition en longueur d'onde combiné ;
envoyer le signal multiplexé par répartition en longueur d'onde combiné à une pluralité de noeuds d'utilisateurs de services de données du réseau optique pour délivrer les données multidiffusées,
recevoir, au niveau de la pluralité de noeuds d'utilisateurs de services de données, le signal multiplexé par répartition en longueur d'onde combiné, et
séparer, au niveau de chacun parmi la pluralité de noeuds d'utilisateurs, la longueur d'onde de services de données multidiffusées à partir du signal multiplexé par répartition en longueur d'onde combiné.

2. Procédé selon la revendication 1, dans lequel le noeud de concentrateur (301) et le noeud de contenu (302) sont colocalisés.

3. Procédé selon la revendication 1, dans lequel l'étape de séparation d'au moins une longueur d'onde comporte une étape de séparation de manière sélective au moins une longueur d'onde pour reconfigurer une livraison de données multidiffusées.

4. Procédé selon la revendication 3, dans lequel l'étape de séparation de manière sélective d'au moins une longueur d'onde est commandée à distance, sans que des changements manuels soient faits à un dispositif séparant de manière sélective la au moins une longueur d'onde.

5. Procédé selon la revendication 1, dans lequel le signal multiplexé par répartition en longueur d'onde comporte une pluralité de longueurs d'onde pour des données multidiffusées et au moins une longueur d'onde pour des données non multidiffusées.

6. Procédé selon la revendication 1, dans lequel l'étape de séparation d'au moins une longueur d'onde comporte une étape de commutation de chaque longueur d'onde séparée pour des données multidiffusées, à partir du réseau optique vers une boucle de modulateur, et
dans lequel l'étape de recombinaison de chaque longueur d'onde séparée comporte une étape de commutation de chaque longueur d'onde modulée à partir de la boucle de modulateur vers le réseau optique.

7. Procédé selon la revendication 6, dans lequel les étapes de commutation sont effectuées par un commutateur à barres croisées de longueurs d'onde à quatre points d'accès (307).

8. Procédé selon la revendication 7, dans lequel chaque étape de commutation commute de manière sélective au moins une longueur d'onde sélectionnée.

9. Procédé selon la revendication 1, dans lequel le réseau optique est un réseau en anneau unidirectionnel.

10. Procédé selon la revendication 1, dans lequel le réseau optique est un réseau en anneau bidirectionnel.

11. Système destiné à multidiffuser des services de données sur un réseau optique, le système comprenant:
une pluralité de noeuds d'utilisateurs de services de données (303, 304, 305, 306) couplés au réseau optique ;
un noeud de concentrateur (301) couplé au réseau optique pour générer un signal multiplexé par répartition en longueur d'onde MRL, le signal MRL comportant une pluralité de longueurs d'onde de signal ;
un commutateur d'interconnexion sélectif de longueurs d'onde (307) couplé au réseau optique, adapté afin de séparer au moins une longueur d'onde de services de données sélectionnée du signal MRL ; et
une boucle de modulateur couplée au commutateur d'interconnexion sélectif de longueurs d'onde destinée à recevoir chaque longueur d'onde de services de données séparée, la boucle de modulateur comprenant un modulateur optique (308) couplé à une source de services de données multidiffusées destinée à moduler chaque longueur d'onde de services de données séparée avec des données de services de données multidiffusées afin de produire une longueur d'onde de services de données multidiffusées,
le commutateur d'interconnexion sélectif de longueur d'onde adapté afin de recombiner chaque longueur d'onde de services de données multidiffusées avec chaque longueur d'onde du signal MRL qui n'a pas été séparé du signal MRL afin de produire un signal multiplexé par répartition en longueur d'onde modulée, et adapté afin de
transmettre le signal MRL modulé vers la pluralité de noeuds d'abonnés du réseau optique pour délivrer les données de services de données multidiffusées.

12. Système selon la revendication 11, dans lequel le dispositif de sélection (307) sépare de manière sélective au moins une longueur d'onde reconfigurant une livraison de données multidiffusées.

13. Système selon la revendication 12, dans lequel le dispositif de sélection (307) est commandé à distance, sans que des changements manuels soient faits au dispositif pour séparer de manière sélective la au moins une longueur d'onde.

14. Système selon la revendication 11, dans lequel le signal multiplexé par répartition en longueur d'onde comporte une pluralité de longueurs d'onde pour des données multidiffusées et au moins une longueur d'onde pour des données non multidiffusées.

15. Système selon la revendication 11, dans lequel le signal multiplexé par répartition en longueur d'onde comporte une pluralité de longueurs d'onde pour des données multidiffusées et au moins une longueur d'onde pour des données non multidiffusées, et
dans lequel le noeud de modulateur (308) comporte un modulateur de multidiffusion modulant chaque longueur d'onde pour des données multidiffusées avec les données multidiffusées dans le noeud de modulateur (308).

16. Système selon la revendication 11, dans lequel le dispositif de sélection est un commutateur à barres croisées de longueurs d'onde à quatre points d'accès(103 ; 203).

17. Système selon la revendication 16, dans lequel le commutateur commute de manière sélective au moins une longueur d'onde sélectionnée.

18. Système selon la revendication 11, dans lequel le réseau optique est un réseau en anneau unidirectionnel.

19. Système selon la revendication 11, dans lequel le réseau optique est un réseau en anneau bidirectionnel.

20. Appareil (102) pour un réseau optique, l'appareil (102) comprenant:
- une source de données multidiffusées adaptée afin de fournir des données de services de données multidiffusées
- un modulateur optique (308) couplé à la source de données multidiffusées, le modulateur étant adapté afin de moduler une pluralité de longueurs d'onde de services de données multidiffusées avec lesdites données de services de données multidiffusées, et
- un commutateur d'interconnexion sélectif de longueurs d'onde (103) couplé audit modulateur optique et
adapté afin d'être couplé au réseau optique et
adapté afin de recevoir un signal MRL ayant une pluralité de longueurs d'onde de services de données multidiffusées ; et
adapté afin de sélectionner et commuter lesdites longueurs d'onde de services de données multidiffusées vers ledit modulateur optique ; et
adapté afin de commuter ladite pluralité de longueurs d'onde de services de données multidiffusées modulée vers ledit réseau optique.

21. Appareil selon la revendication 20, dans lequel le commutateur (103) est un commutateur à barres croisées de longueurs d'onde à quatre points d'accès.

22. Appareil selon la revendication 21, dans lequel le commutateur (103) commute de manière sélective au moins une longueur d'onde sélectionnée.

23. Appareil selon la revendication 20, dans lequel le réseau optique est un réseau en anneau unidirectionnel.

24. Appareil selon la revendication 20, dans lequel le réseau optique est un réseau en anneau bidirectionnel.
